# EUROPEAN PATENT APPLICATION

(11) **EP 4 546 171 A1**
(43) Date of publication of application: **30.04.2025**
(21) Application number: 24206707.2
(22) Date of filing: 15.10.2024
(51) Int. Cl.: G06F 16/955, G06F 16/958

(54) **CONFIGURATION FILES TO GROUP ACTIONS IN A SINGLE-CLICK ENVIRONMENT**

(30) Priority: 18.10.2023 US 202318489554; 18.10.2023 US 202318489537
(71) Applicant: Capital One Services, LLC, McLean, Virginia 22102 (US)
(72) Inventor: JAIN, Parag, McLean, 22102 (US); PRUITT, Michael, McLean, 22102 (US); WOLFERMAN, Benjamin, McLean, 22102 (US); PEER, Mohideen, McLean, 22102 (US); ROBB, Paul Bradley, McLean, 22102 (US); YAFUSO, Kevin, McLean, 22102 (US)
(74) Representative: Boult Wade Tennant LLP

(57) **Abstract**

In some implementations, a web host may receive a configuration file associated with at least one action. The web host may determine, using the configuration file, that the at least one action is controlled for concurrency. Accordingly, the web host may generate a URL for the at least one action. The URL may include a slug, and the slug may include an identifier associated with the action and at least one bit indicating that the action is controlled for concurrency.

## Description

### BACKGROUND

In order to perform an action associated with an account, a user device may provide a set of credentials associated with a user that owns (or at least controls) the account. In order to expedite the action, the user device may transmit a request using a single-click uniform resource locator (URL). Therefore, a remote system may perform the action without having to receive the set of credentials.

### SUMMARY

Some implementations described herein relate to a system for preventing double actions using configuration files in a single-click environment. The system may include one or more memories and one or more processors communicatively coupled to the one or more memories. The one or more processors may be configured to receive an indication of a click event associated with a single-click URL that is associated with an action. The one or more processors may be configured to receive a configuration file associated with the action. The one or more processors may be configured to determine, using the configuration file, that the action is controlled for concurrency. The one or more processors may be configured to communicate with a remote database to determine whether the action is currently locked. The one or more processors may be configured to selectively trigger execution of the action based on whether the action is currently locked.

Some implementations described herein relate to a method of preventing double actions using configuration files in a single-click environment. The method may include receiving, at a web host, a configuration file defining a plurality of actions. The method may include providing, from the web host and to a machine learning model, code associated with the plurality of actions. The method may include receiving, at the web host and from the machine learning model, an indication of two or more actions, in the plurality of actions, that are contradictory. The method may include encoding, by the web host, a plurality of concurrency indicators associated with the two or more actions. The method may include outputting, by the web host, an updated configuration file based on the configuration file and the plurality of concurrency indicators.

Some implementations described herein relate to a non-transitory computer-readable medium that stores a set of instructions for generating URLs using configuration files in a single-click environment. The set of instructions, when executed by one or more processors of a device, may cause the device to receive a configuration file associated with at least one action. The set of instructions, when executed by one or more processors of the device, may cause the device to determine, using the configuration file, that the at least one action is controlled for concurrency. The set of instructions, when executed by one or more processors of the device, may cause the device to generate a URL for the at least one action, wherein the URL comprises a slug that includes an identifier associated with the action and at least one bit indicating that the action is controlled for concurrency.

### BRIEF DESCRIPTION OF THE DRAWINGS

Figs. 1A-1D are diagrams of an example implementation relating to using configuration files to group actions in a single-click environment, in accordance with some embodiments of the present disclosure.
Figs. 2A-2D are diagrams of an example implementation relating to using configuration files to prevent double actions in a single-click environment, in accordance with some embodiments of the present disclosure.
Fig. 3 is a diagram illustrating an example of training and using a machine learning model in connection with systems and/or methods described herein, in accordance with some embodiments of the present disclosure.
Fig. 4 is a diagram of an example environment in which systems and/or methods described herein may be implemented, in accordance with some embodiments of the present disclosure.
Fig. 5 is a diagram of example components of one or more devices of Fig. 4, in accordance with some embodiments of the present disclosure.
Fig. 6 is a flowchart of an example process relating to using configuration files to group actions in a single-click environment, in accordance with some embodiments of the present disclosure.

### DETAILED DESCRIPTION

The following detailed description of example implementations refers to the accompanying drawings. The same reference numbers in different drawings may identify the same or similar elements.

Generally, in order to perform an action associated with an account, a user device may provide a set of credentials associated with a user that owns (or at least controls) the account. Accordingly, a web host (or another type of remote device) may validate the set of credentials, and the user device may request the web host to perform the action after the set of credentials are validated. This process increases network overhead and consumes time, power, and computing resources. In order to expedite the action and conserve computing resources, the user device may transmit a request using a single-click uniform resource locator (URL). For example, the URL may encode an identifier of the action such that the web host may perform the action without receiving and validating the set of credentials.

However, some actions may include contradictory workflows at the web host. For example, a workflow to register an email address for a newsletter should not be executed concurrently with a workflow to unsubscribe the email address from the newsletter. In another example, a workflow to process a minimum payment for an account should not be executed concurrently with a workflow to process a statement payment for the account. Nonetheless, user and device errors sometimes result in multiple single-click URLs, associated with contradictory workflows, being activated within a short amount of time. For example, a communication, such as an email message or a text message, may include a plurality of single-click URLs, such that the user (and/or the user device) transmits a plurality of requests, associated with the plurality of single-click URLs, within a short amount of time. As a result, the web host may waste power and processing resources on contradictory workflows or may even fail to correctly perform actions due to an error in trying to process the contradictory workflows.

Some implementations described herein enable a configuration file (e.g., a JavaScript° object notation (JSON) file and/or a Python file, among other examples) to indicate whether an action is controlled for concurrency. Therefore, a web instance processing an event associated with the action may check the configuration file and may refrain from performing the action based on a concurrent action already being executed. As a result, the web instance conserves power and processing resources and ensures that the concurrent action is correctly performed by preventing an error that would otherwise be caused by a contradictory action.

Additionally, or alternatively, some implementations described herein enable a URL for an action to be generated based on a configuration file. Therefore, when the configuration file indicates that the action is controlled for concurrency, the URL may also indicate that the action is controlled for concurrency. As a result, user devices and web instances may readily identify whether actions are controlled for concurrency based on URLs, which conserves power and processing resources that otherwise would have been spent on trying to execute actions that are locked.

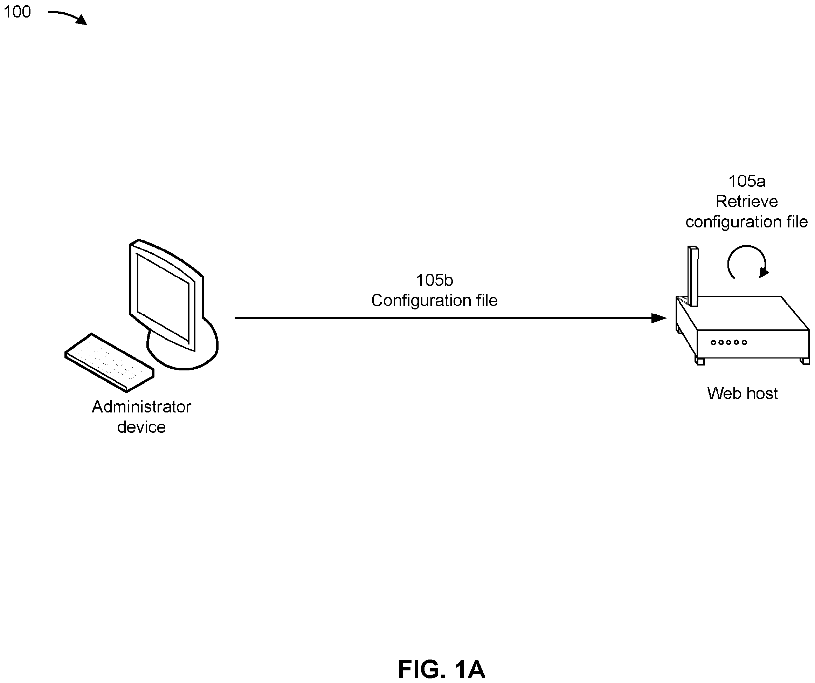

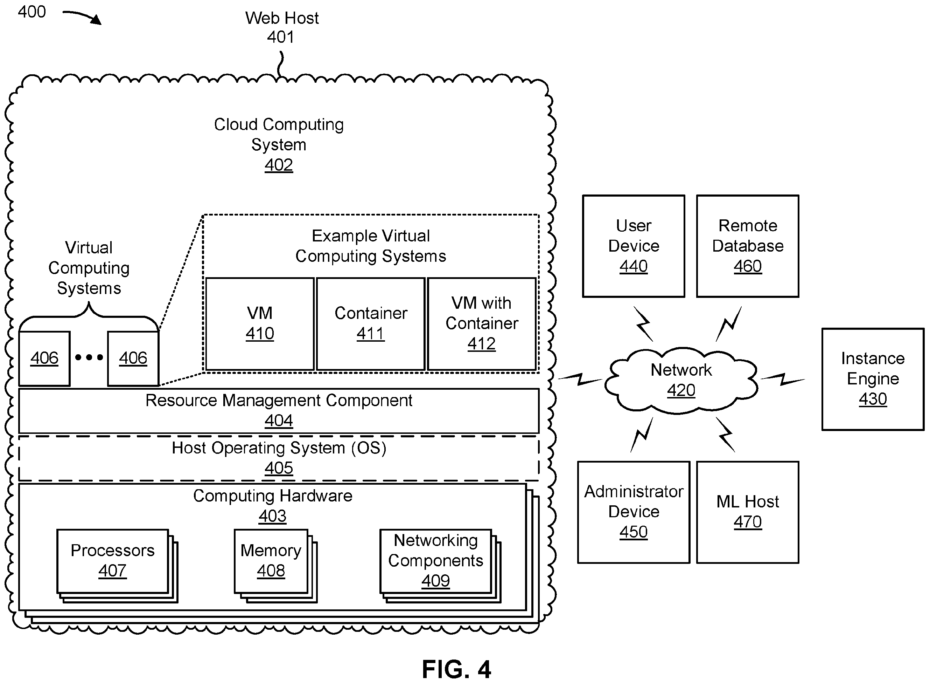

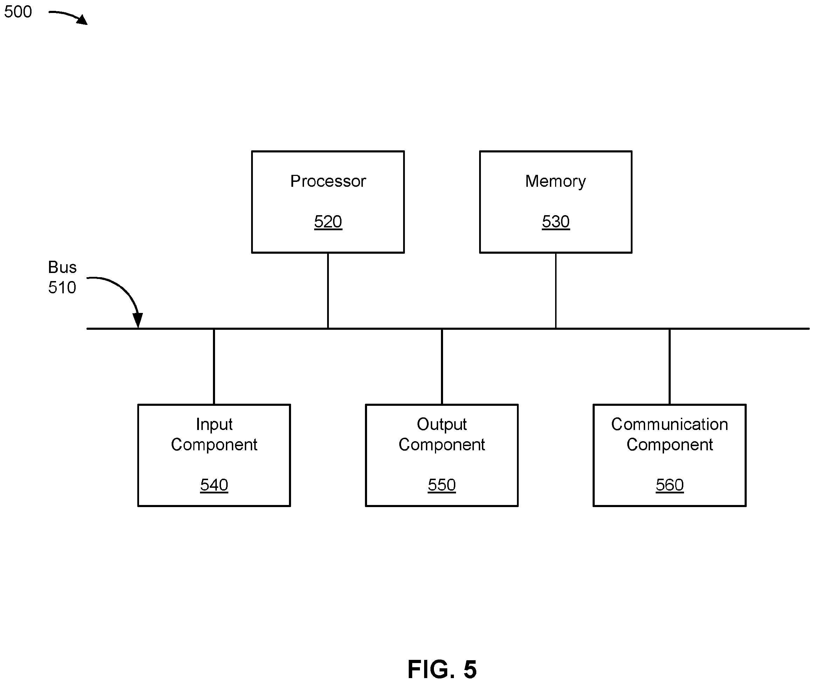

Figs. 1A-1D are diagrams of an example 100 associated with using configuration files to group actions in a single-click environment. As shown in Figs. 1A-1D, example 100 includes an administrator device, a web host, a machine learning (ML) model (e.g., provided by an ML host), and a web instance. These devices are described in more detail in connection with Figs. 4 and 5.

As shown in Fig. 1A, a web host may receive a configuration file defining a plurality of actions. For example, the configuration file may include a JSON file (or another type of structured file, such as an extensible markup language (XML) file) that defines an array of actions (e.g., an *Actions* array) that includes a plurality of objects, with each object corresponding to one of the plurality of actions. Each object may include an identifier associated with the action (e.g., a *name* variable) and code (or at least an indication of an additional file including the code) that defines the action (e.g., an *execution* variable), among other examples. In some implementations, as shown by reference number 105a, the web host may retrieve the configuration file. For example, the web host may receive the configuration file from a local storage (e.g., a cache and/or another type or memory controlled by the web host) or from a storage that is at least partially separate from the web host (e.g., physically, virtually, and/or logically). Additionally, or alternatively, as shown by reference number 105b, the administrator device may transmit, and the web host may receive, the configuration file. For example, a user of the administrator device may interact with a user interface (UI) (e.g., using an input component of the administrator device) to trigger the administrator device to transmit the configuration file. In a combinatory example, the administrator device may transmit an indication of a location of the configuration file (e.g., a filename, a file path, and/or an Internet protocol (IP) address, among other examples), such that the web host receives the configuration file from the location (e.g., in response to transmitting a request, such as a hypertext transfer protocol (HTTP) request or a file transfer protocol (FTP) address, among other examples).

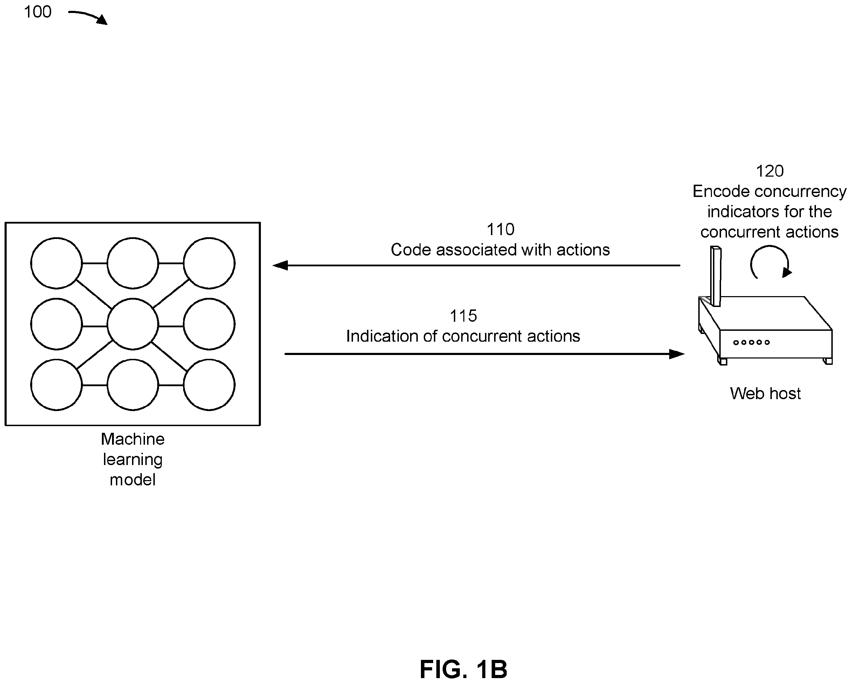

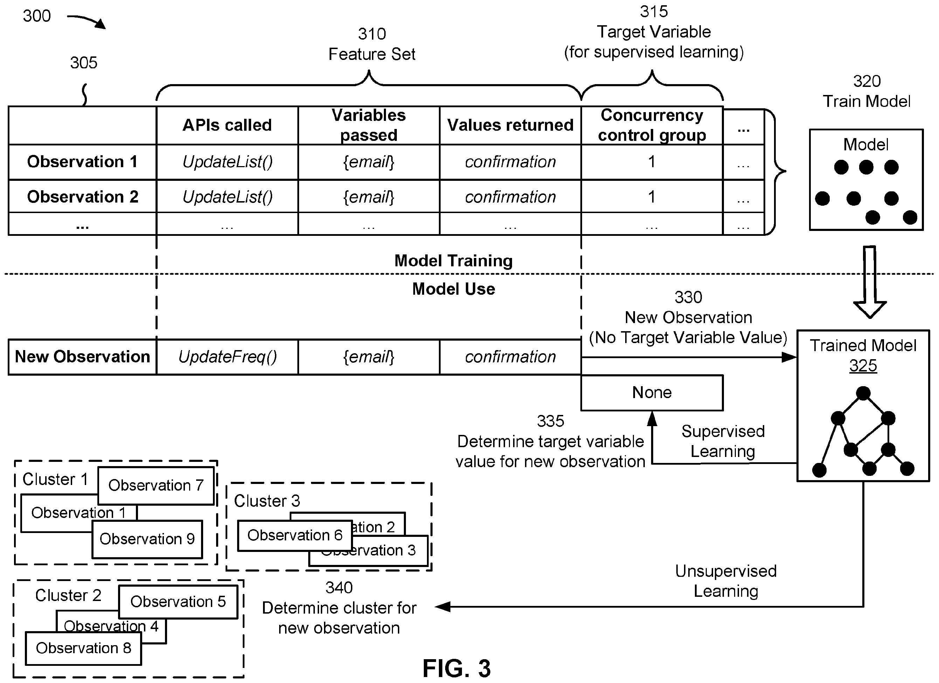

As shown in Fig. 1B and by reference number 110, the web host may provide, to the ML model, code associated with the plurality of actions. For example, the web host may transmit, and the ML host may receive, a request including the code. The ML model may be trained (e.g., by the ML host and/or a device at least partially separate from the ML host) using code associated with other configuration files (e.g., a labeled set of code for supervised learning or an unlabeled set of code for deep learning, among other examples). Accordingly, the ML model may be configured to determine which actions, in the plurality of actions, are contradictory. As used herein, "contradictory" refers to actions associated with workflows that ought not be executed simultaneously (or at least concurrently). The ML model may be trained and deployed as described in connection with Fig. 3.

As shown by reference number 115, the ML model may output, and the web host may receive, an indication of two or more actions, in the plurality of actions, that are contradictory. The ML host may transmit the indication in response to the request from the web host, as described above. In some implementations, the plurality of actions may form a set of actions, and the ML model may determine a subset of actions, within the set of actions, that should be controlled for concurrency. Accordingly, the ML model may output a list of indices, names, and/or other indicators of the subset of actions. Alternatively, the ML model may determine multiple subsets of actions, where each subset includes two or more actions that are contradictory and should be controlled for concurrency. In other words, the ML model may identify multiple concurrency control groups, where each concurrency control group includes two or more actions. Accordingly, the ML model may output, for each concurrency control group, a data structure, where the data structure includes a list of indices, names, and/or other indicators of actions included in the concurrency control group.

As shown by reference number 120, the web host may encode a plurality of concurrency indicators associated with the two or more actions. In some implementations, each concurrency indicator, in the plurality of concurrency indicators, includes a Boolean (and/or another type of binary indicator). For example, the Boolean may be set to '1' or `TRUE' for each action that should be controlled for concurrency (that is, for each action indicated by the ML model). In one example, the web host may use Booleans based on the ML model indicating a single subset of actions (including two or more actions) that should be controlled for concurrency; therefore, the web host may encode positive indicators for the subset of actions and negative indicators for remaining actions in the configuration file.

Additionally, or alternatively, a concurrency indicator (e.g., at least one concurrency indicator), in the plurality of concurrency indicators, includes an index representing a concurrency control group (that includes two or more actions indicated by the ML model). For example, the index may be set to an integer between 1 and *n,* where *n* represents the total number of concurrency control groups indicated by the ML model. Accordingly, an index of 0 may represent a lack of concurrency control. Alternatively, the index may be set to an integer between 0 and (n-1), and a lack of an index may represent a lack of concurrency control. In one example, the web host may use indices based on the ML model multiple concurrency control groups (each including two or more actions); therefore, the web host may encode indices representing the concurrency control groups, and the web host may either encode indices of zero, or refrain from encoding any indices, for actions in the configuration file that are excluded from the concurrency control groups.

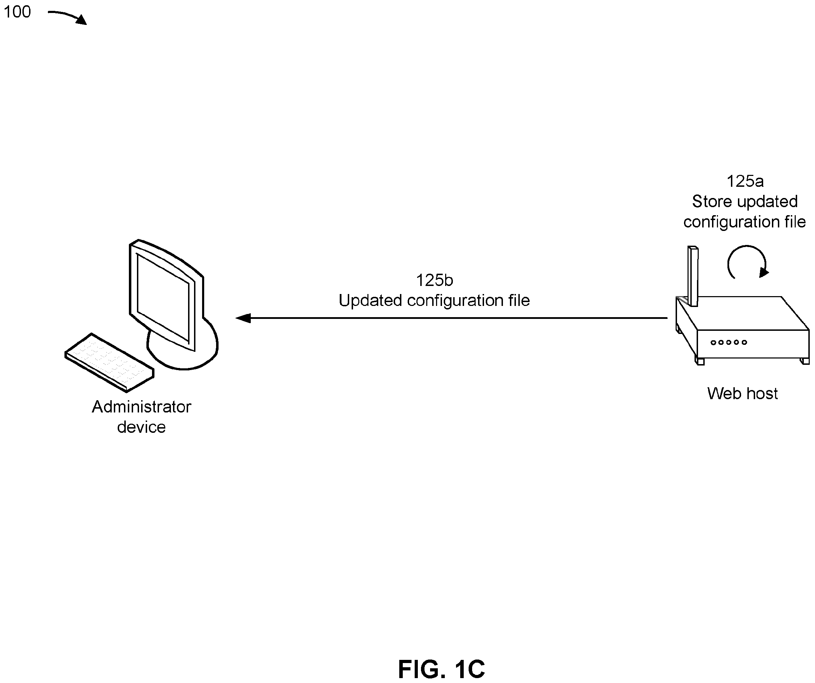

As shown in Fig. 1C, the web host may output an updated configuration file based on the configuration file and the plurality of concurrency indicators. In some implementations, as shown by reference number 125a, the web host may store the updated configuration file. For example, the web host may transmit the updated configuration file to a local storage (e.g., a cache and/or another type or memory controlled by the web host) or to a storage that is at least partially separate from the web host (e.g., physically, virtually, and/or logically). Additionally, or alternatively, as shown by reference number 125b, the administrator device may transmit, and the web host may receive, the updated configuration file. For example, the administrator device may output the updated configuration file (e.g., using an output component of the administrator device) to the user of the administrator device. Additionally, or alternatively, the administrator device may store the updated configuration file in a memory controlled by the administrator device. In a combinatory example, the web host may transmit an indication of a location of the configuration file (e.g., a filename, a file path, and/or an IP address, among other examples), such that the administrator device may retrieve the configuration file from the location (e.g., in response to transmitting a request, such as an HTTP request or an FTP address, among other examples).

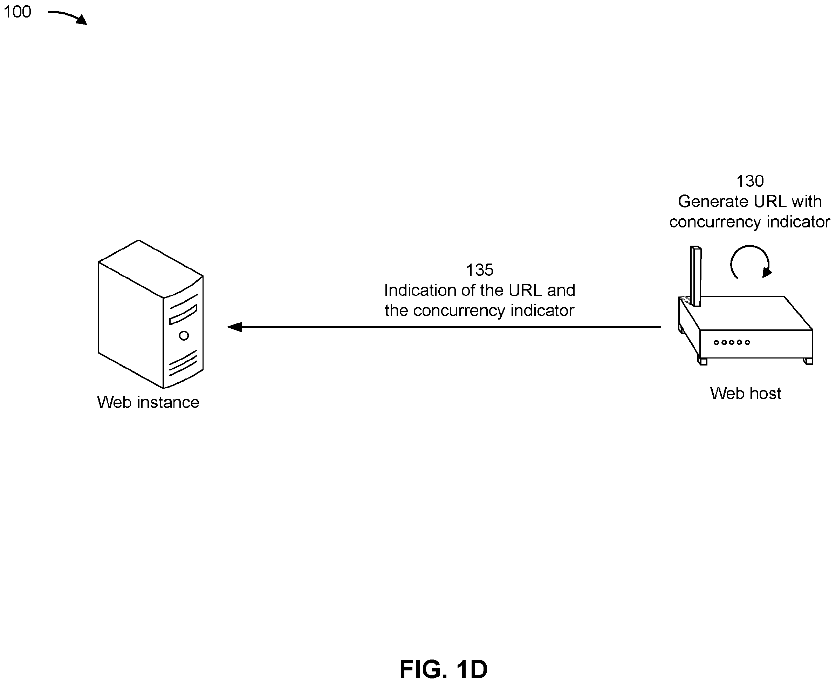

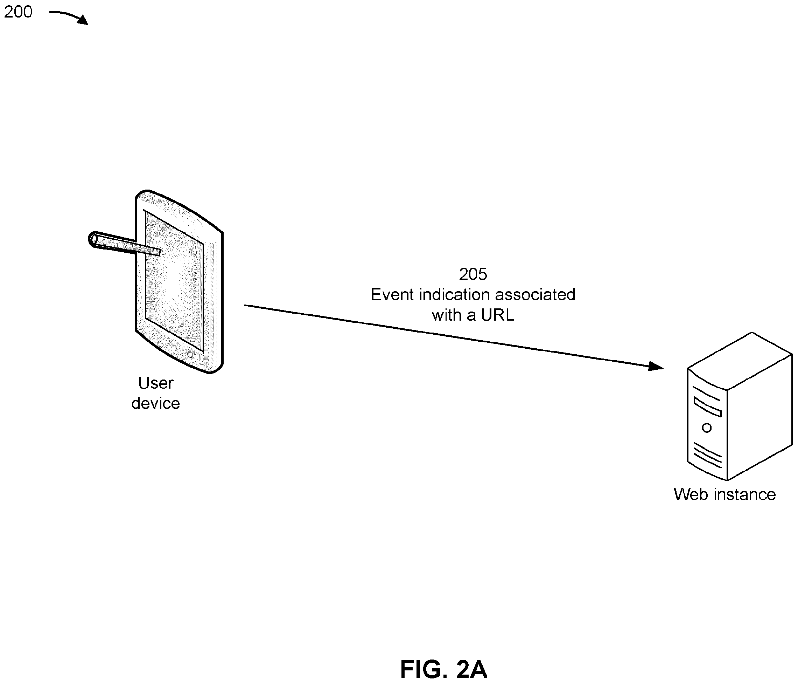

As shown in Fig. 1D, the web host may additionally generate URLs from the configuration file. Although the example 100 is described in connection with the web host generating URLs from the updated configuration file, other examples may include the web host generating URLs from a configuration file that already includes concurrency control indicators. For example, the web host may receive the configuration file (e.g., as described in connection with Fig. 1A) and proceed to operations described in connection with Fig. 1D. In some implementations, the web host may transmit a request, for the configuration file, that indicates an action (e.g., by including an index, a name, and/or another type of information that identifies the action) and may receive the configuration file in response to the request. Alternatively, other examples may include the web host generating the updated configuration file without generating URLs. For example, the web instance may use the updated configuration file to check for concurrency, as described in connection with Figs. 2A-2D.

As shown by reference number 130, the web host may generate a URL, for an action (e.g., at least one action) in the (updated) configuration file, that includes an indicator that the action is controlled for concurrency. The indicator may include a character (e.g., at least one character) in the URL. For example, the indicator may encode an identifier of a concurrency control group out of a plurality of possible concurrency control groups. Additionally, or alternatively, the indicator may include a bit (e.g., at least one bit) in the URL. For example, the indicator may encode a Boolean or another type of binary indicator of concurrency control.

In some implementations, the URL may include a slug, and the slug may include the indicator that the action is controlled for concurrency. As used herein, "slug" may refer to a unique identifier (of a page or action) included in the URL, where the slug is unique relative to related pages or actions. A slug may be numeric only or may be alphanumeric. A slug may be human-readable (e.g., encoding a title of a page or action through a parameter, such as "?title=EXAMPLE-TITLE") and/or may be machine-readable (e.g., encoding a sequence of characters in the URL, such as "/j3i5nbiserk"). In some implementations, the slug may include a first portion associated with a session identifier (ID) and a second portion associated with an identifier of the action (also referred to as an "action ID"). Accordingly, the indicator included in the slug may be in the second portion of the slug. Additionally, or alternatively, the indicator may include a most significant bit (MSB) or a least significant bit (LSB) in a bit sequence that encodes the action ID.

As shown by reference number 135, the web host may transmit, and the web instance may receive, an indication of the URL and of the indicator that the action is controlled for concurrency. For example, the web host may transmit a data structure (e.g., a tabular data structure, a graph data structure, or another type of relational data structure) that associates URLs with corresponding actions. Additionally, the data structure may indicate which character(s) and/or which bit(s) in the URLs function as concurrency control indicators. Alternatively, the web host may transmit a separate indication of which character(s) and/or which bit(s) in the URLs function as concurrency control indicators. The bits (or characters) may be indicated using an overall position (e.g., the indicator is a tenth bit or character in the URLs), a position relative to slugs (e.g., the indicator is a fourth bit or character in the slugs), and/or a position relative to a portion of the slugs (e.g., the indicator is a first bit or character in action IDs in the slugs).

Although the example 100 is described in connection with the web host transmitting the indication to the web instance, the web host may additionally or alternatively transmit the indication to an instance engine associated with the web instance. Accordingly, the instance engine may inform multiple web instances, hosted by the instance engine, about the URL and the indicator. For example, the instance engine may forward the data structure from the web host, as described above, to each web instance.

By using techniques as described in connection with Figs. 1A-1D, the web host may generate a URL for an action based on the (updated) configuration file. Because the (updated) configuration file indicates that the action is controlled for concurrency, the URL also indicates that the action is controlled for concurrency. As a result, user devices and web instances may readily identify whether actions are controlled for concurrency based on URLs, which conserves power and processing resources that otherwise would have been spent on trying to execute actions that are locked.

As indicated above, Figs. 1A-1D are provided as an example. Other examples may differ from what is described with regard to Figs. 1A-1D.

Figs. 2A-2D are diagrams of an example 200 associated with using configuration files to prevent double actions in a single-click environment. As shown in Figs. 2A-2D, example 100 includes a user device, a web instance, a web host, and a remote database. These devices are described in more detail in connection with Figs. 4 and 5.

As shown in Fig. 2A and by reference number 205, the user device may transmit, and the web instance may receive, an indication of an event associated with a URL. For example, the event may include a click event (e.g., caused by the user of the user device clicking or tapping on the URL, or on a UI element associated with the URL, via an input component of the user device). Accordingly, the user device may transmit a request (e.g., an HTTP request) using the URL, and the request may indicate the event.

The URL may be a single-click URL associated with an action. For example, the event associated with the URL may trigger performance of the action. The URL may include a slug that indicates the action (e.g., using an action ID, as described above).

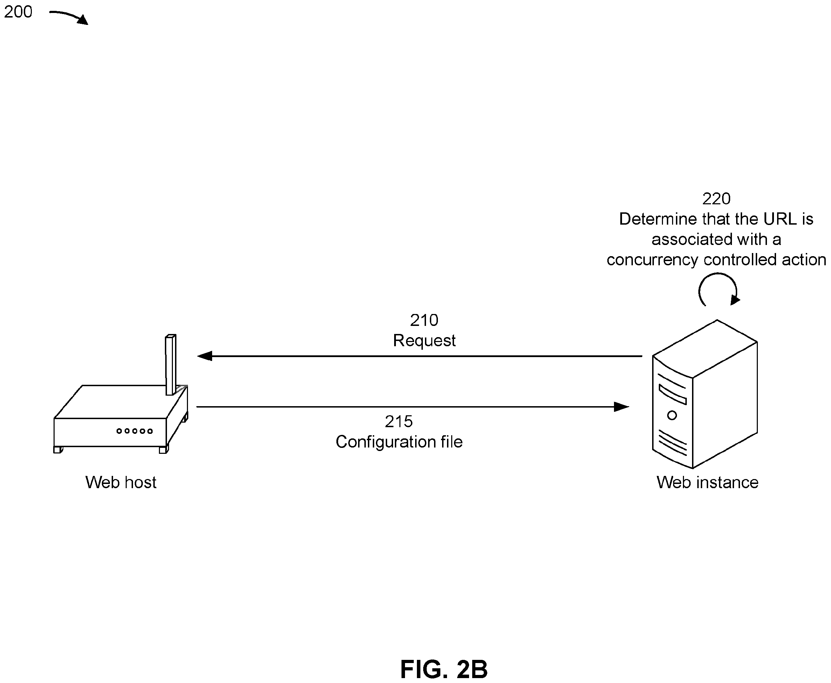

As shown in Fig. 2B and by reference number 210, the web instance may transmit, and the web host may receive, a request for a configuration file associated with the action. The web instance may transmit the request for the configuration file in response to the indication of the event. The configuration file may include a JSON file that indicates the action, indicates whether the action is controlled for concurrency (and/or indicates a concurrency control group including the action), and indicates code for performing the action. The configuration file may indicate the code directly or may link to an additional file (e.g., a Python file) with the code. The request may include an HTTP request, an FTP request, and/or another type of request message. The web instance may indicate the action in the request (e.g., using a name of the action, an action ID for the action, and/or another alphanumeric identifier associated with the action).

As shown by reference number 215, the web host may transmit, and the web instance may receive, the configuration file. The web host may transmit, and the web instance may receive, the configuration file in response to the request.

As shown by reference number 220, the web instance may determine, using the configuration file, that the action is controlled for concurrency. In some implementations, the configuration file may include a *concurrency controiled_group* variable associated with the action that includes a Boolean indicator (or another type of binary indicator) of concurrency control. Therefore, a value of `1' or `TRUE' associated with the action indicates that the action is controlled for concurrency. Additionally, or alternatively, the web instance may determine, using the configuration file, a concurrency control group that includes the action. In some implementations, the *concurrency controiled_group* variable associated with the action may include a numeric, hexadecimal, or alphanumeric indicator of a concurrency control group including the action. Therefore, a non-zero value (or even mere presence of any value) associated with the action indicates that the action is controlled for concurrency.

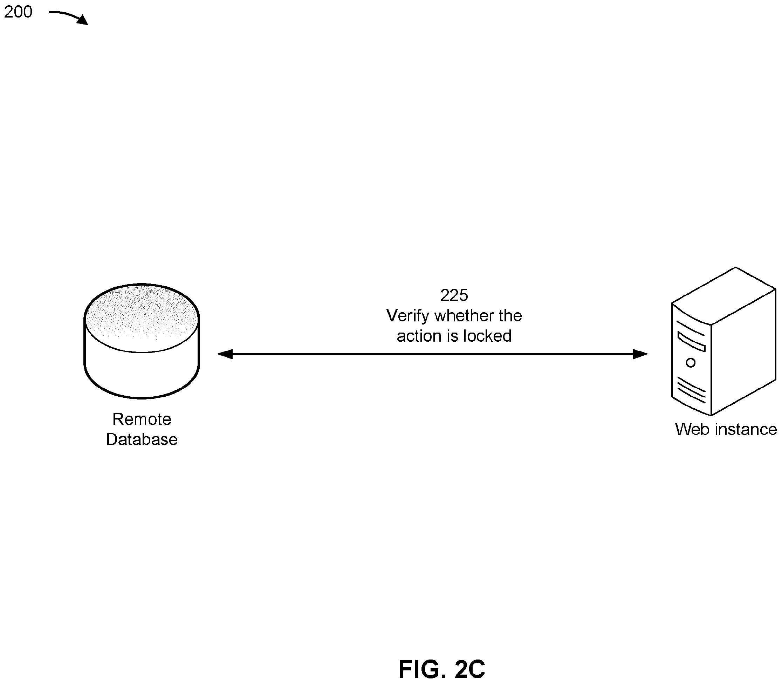

As shown in Fig. 2C and by reference number 225, the web instance may communicate with the remote database to determine whether the action (and/or the concurrency control group including the action) is locked. Accordingly, when the action (and/or the concurrency control group including the action) is currently locked, the web instance may refrain from performing the action, which conserves power and processing resources at the web instance. Additionally, the web instance ensures that an ongoing action is correctly performed by preventing an error that would otherwise be caused by performing the action.

In some implementations, the web instance may verify whether a lock key associated with the action (and/or the concurrency control group including the action) is present in the remote database. In some implementations, the lock key may include an indicator that the action is controlled for concurrency (e.g., as encoded in the configuration file) and may be associated with execution of the action. Therefore, when the action (and/or the concurrency control group including the action) is unlocked, the web instance may write the lock key to the remote database in order to prevent performance of another action controlled by concurrency (and/or another action in the same concurrency control group), which conserves power and processing resources at the web instance. Additionally, the web instance ensures that an ongoing action is correctly performed by preventing an error that would otherwise be caused by performing the action.

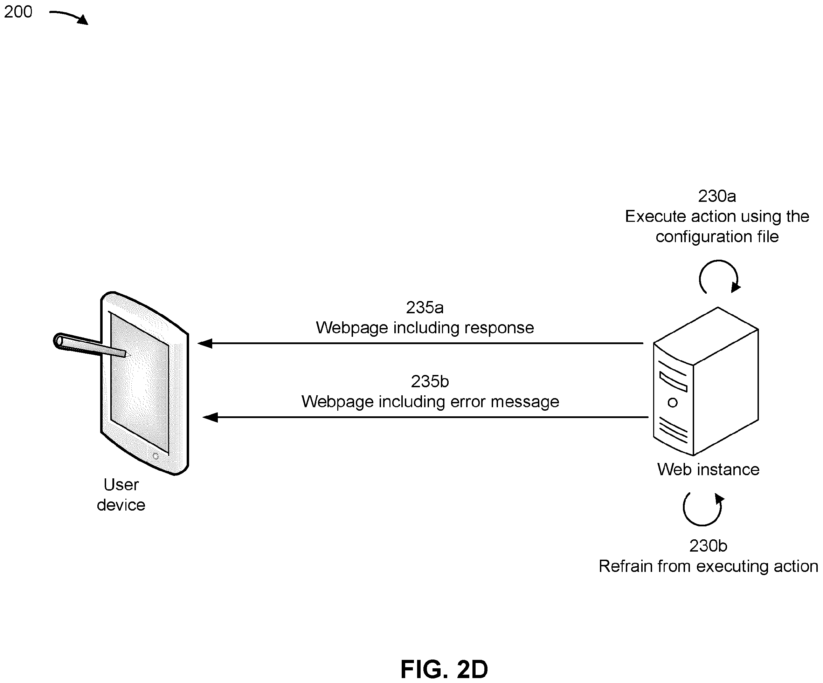

In some implementations, the lock key may be written with an expiry time (e.g., an amount of time after which the remote database should remove the lock key and/or a particular datetime at which the remote database should remove the lock key). The expiry time may be indicated in the configuration file (whether as a global variable or as a variable within an object representing the action). Therefore, the action (and/or the concurrency control group including the action) is not locked indefinitely but only for an amount of time that approximates an amount of time used to perform a workflow associated with the action (optionally with some extra time to control for latency). Additionally, or alternatively, the web instance may transmit a command to delete the lock key in response to performing the action (e.g., as described in connection with Fig. 2D).

As shown in Fig. 2D, the web instance may selectively trigger execution of the action, using the configuration file, based on whether the action (and/or the concurrency control group including the action) is (currently) locked. Selective execution may include execution of the action when the action (and/or the concurrency control group including the action) is (currently) unlocked, as described in connection with reference number 230a, and restraint from execution of the action when the action (and/or the concurrency control group including the action) is (currently) locked, as described in connection with reference number 230b.

As shown by reference number 230a, the web instance may execute the action using the configuration file. In some implementations, the web instance may execute code included in (or at least indicated by) the configuration file to perform the action. Alternatively, as shown by reference number 230b, the web instance may refrain from executing the action.

In some implementations, the web instance may transmit, and the user device may receive, a response associated with the event (e.g., based on performing the action). As shown by reference number 235a, the web instance may transmit, and the user device may receive, a webpage including the response. The webpage may include a hypertext markup language (HTML) file, a cascading style sheet (CSS), and/or supporting media (e.g., an image file, an audio file, and/or a video file, among other examples). Accordingly, the user device may output (e.g., using a web browser executed by the user device) the webpage including the response. Alternatively, the web instance may transmit, and the user device may receive, an error message associated with the event (e.g., based on refraining from performing the action). As shown by reference number 235b, the web instance may transmit, and the user device may receive, a webpage including the error message. The webpage may include an HTML file, a CSS, and/or supporting media (e.g., an image file, an audio file, and/or a video file, among other examples). Accordingly, the user device may output (e.g., using a web browser executed by the user device) the webpage including the error message.

By using techniques as described in connection with Figs. 2A-2D, the configuration file for an action indicates whether the action is controlled for concurrency. Therefore, the web instance may refrain from performing a second action based on a first action already being executed. As a result, the web instance conserves power and processing resources and ensures that the first action is correctly performed by preventing an error that would otherwise be caused by the second action.

As indicated above, Figs. 2A-2D are provided as an example. Other examples may differ from what is described with regard to Figs. 2A-2D.

Fig. 3 is a diagram illustrating an example 300 of training and using a machine learning model in connection with grouping actions in a single-click environment. The machine learning model training and usage described herein may be performed using a machine learning system. The machine learning system may include or may be included in a computing device, a server, a cloud computing environment, or the like, such as the ML host described in more detail elsewhere herein.

As shown by reference number 305, a machine learning model may be trained using a set of observations. The set of observations may be obtained from training data (e.g., historical data), such as data gathered during one or more processes described herein. In some implementations, the machine learning system may receive the set of observations (e.g., as input) from the web host, as described elsewhere herein.

As shown by reference number 310, the set of observations may include a feature set. The feature set may include a set of variables, and a variable may be referred to as a feature. A specific observation may include a set of variable values (or feature values) corresponding to the set of variables. In some implementations, the machine learning system may determine variables for a set of observations and/or variable values for a specific observation based on input received from the web host. For example, the machine learning system may identify a feature set (e.g., one or more features and/or feature values) by extracting the feature set from structured data, by performing natural language processing to extract the feature set from unstructured data, and/or by receiving input from an operator.

As an example, a feature set for a set of observations may include a first feature of which application programming interfaces (APIs) are called, a second feature of which variables are passed (e.g., to API functions that are called), a third feature of which values are returned, and so on. As shown, for a first observation, the first feature may have a value of *UpdateListo,* the second feature may have a value of {*email*}, the third feature may have a value of *confirmation,* and so on. These features and feature values are provided as examples, and may differ in other examples. For example, the feature set may include one or more of the following features: a number of lines of code, a function name, a list of IP addresses, a set of code, and/or a filename, among other examples.

As shown by reference number 315, the set of observations may be associated with a target variable. The target variable may represent a variable having a numeric value, may represent a variable having a numeric value that falls within a range of values or has some discrete possible values, may represent a variable that is selectable from one of multiple options (e.g., one of multiples classes, classifications, or labels) and/or may represent a variable having a Boolean value. A target variable may be associated with a target variable value, and a target variable value may be specific to an observation. In example 300, the target variable is a concurrency control group, which has a value of 1 for the first observation.

The feature set and target variable described above are provided as examples, and other examples may differ from what is described above. For example, the target variable may be a Boolean (or another type of binary indicator) rather than an index (or another type of identifier) associated with a concurrency control group.

The target variable may represent a value that a machine learning model is being trained to predict, and the feature set may represent the variables that are input to a trained machine learning model to predict a value for the target variable. The set of observations may include target variable values so that the machine learning model can be trained to recognize patterns in the feature set that lead to a target variable value. A machine learning model that is trained to predict a target variable value may be referred to as a supervised learning model.

In some implementations, the machine learning model may be trained on a set of observations that do not include a target variable. This may be referred to as an unsupervised learning model. In this case, the machine learning model may learn patterns from the set of observations without labeling or supervision, and may provide output that indicates such patterns, such as by using clustering and/or association to identify related groups of items within the set of observations.

As shown by reference number 320, the machine learning system may train a machine learning model using the set of observations and using one or more machine learning algorithms, such as a regression algorithm, a decision tree algorithm, a neural network algorithm, a k-nearest neighbor algorithm, a support vector machine algorithm, or the like. After training, the machine learning system may store the machine learning model as a trained machine learning model 325 to be used to analyze new observations.

As an example, the machine learning system may obtain training data for the set of observations based on labeled code from configuration files. Alternatively, the machine learning system may use unlabeled code (e.g., in implementations with unsupervised learning).

As shown by reference number 330, the machine learning system may apply the trained machine learning model 325 to a new observation, such as by receiving a new observation and inputting the new observation to the trained machine learning model 325. As shown, the new observation may include a first feature of *UpdateFreq(),* a second feature of {*email*}*,* a third feature of *confirmation,* and so on, as an example. The machine learning system may apply the trained machine learning model 325 to the new observation to generate an output (e.g., a result). The type of output may depend on the type of machine learning model and/or the type of machine learning task being performed. For example, the output may include a predicted value of a target variable, such as when supervised learning is employed. Additionally, or alternatively, the output may include information that identifies a cluster to which the new observation belongs and/or information that indicates a degree of similarity between the new observation and one or more other observations, such as when unsupervised learning is employed.

As an example, the trained machine learning model 325 may predict a value of "None" for the target variable of a concurrency control group for the new observation, as shown by reference number 335. Other examples may include a value of 0 or a value of *null* to represent the predicted value. Based on this prediction, the machine learning system may provide a first recommendation, may provide output for determination of a first recommendation, may perform a first automated action, and/or may cause a first automated action to be performed (e.g., by instructing another device to perform the automated action), among other examples. The first recommendation may include, for example, refraining from controlling an action associated with the new observation for concurrency. The first automated action may include, for example, encoding a negative indicator of concurrency control in a configuration file that defines the action associated with the new observation (or refraining from modifying the configuration file, which implicitly indicates a lack of concurrency control).

As another example, if the machine learning system were to predict a value of 1 for the target variable of concurrency control group, then the machine learning system may provide a second (e.g., different) recommendation (e.g., including the action associated with the new observation in a first concurrency control group) and/or may perform or cause performance of a second (e.g., different) automated action (e.g., encoding an indicator of the first concurrency control group in a configuration file that defines the action associated with the new observation).

In some implementations, the trained machine learning model 325 may classify (e.g., cluster) the new observation in a cluster, as shown by reference number 340. The observations within a cluster may have a threshold degree of similarity. As an example, if the machine learning system classifies the new observation in a first cluster (e.g., associated with no concurrency control), then the machine learning system may provide a first recommendation, such as the first recommendation described above. Additionally, or alternatively, the machine learning system may perform a first automated action and/or may cause a first automated action to be performed (e.g., by instructing another device to perform the automated action) based on classifying the new observation in the first cluster, such as the first automated action described above.

As another example, if the machine learning system were to classify the new observation in a second cluster (e.g., associated with concurrency control group 2), then the machine learning system may provide a second (e.g., different) recommendation (e.g., including the action associated with the new observation in a second concurrency control group) and/or may perform or cause performance of a second (e.g., different) automated action, such as encoding an indicator of the second concurrency control group in a configuration file that defines the action associated with the new observation.

In some implementations, the recommendation and/or the automated action associated with the new observation may be based on a target variable value having a particular label (e.g., classification or categorization), may be based on whether a target variable value satisfies one or more threshold (e.g., whether the target variable value is greater than a threshold, is less than a threshold, is equal to a threshold, falls within a range of threshold values, or the like), and/or may be based on a cluster in which the new observation is classified.

In some implementations, the trained machine learning model 325 may be re-trained using feedback information. For example, feedback may be provided to the machine learning model. The feedback may be associated with actions performed based on the recommendations provided by the trained machine learning model 325 and/or automated actions performed, or caused, by the trained machine learning model 325. In other words, the recommendations and/or actions output by the trained machine learning model 325 may be used as inputs to re-train the machine learning model (e.g., a feedback loop may be used to train and/or update the machine learning model). For example, the feedback information may include input from the administrator device, as described elsewhere herein, indicating whether actions, classified by the trained machine learning model 325, should be controlled for concurrency (or not).

In this way, the machine learning system may apply a rigorous and automated process to updating a configuration file with concurrency control indicators. The machine learning system may enable recognition and/or identification of tens, hundreds, thousands, or millions of features and/or feature values for tens, hundreds, thousands, or millions of observations, thereby increasing accuracy and consistency and reducing delay associated with updating the configuration file relative to requiring computing resources to be allocated for tens, hundreds, or thousands of operators to encode the concurrency control indicators.

As indicated above, Fig. 3 is provided as an example. Other examples may differ from what is described in connection with Fig. 3.

Fig. 4 is a diagram of an example environment 400 in which systems and/or methods described herein may be implemented. As shown in Fig. 4, environment 400 may include a web host 401, which may include one or more elements of and/or may execute within a cloud computing system 402. The cloud computing system 402 may include one or more elements 403-412, as described in more detail below. As further shown in Fig. 4, environment 400 may include a network 420, an instance engine 430, a user device 440, an administrator device 450, a remote database 460, and/or an ML host 470. Devices and/or elements of environment 400 may interconnect via wired connections and/or wireless connections.

The cloud computing system 402 may include computing hardware 403, a resource management component 404, a host operating system (OS) 405, and/or one or more virtual computing systems 406. The cloud computing system 402 may execute on, for example, an Amazon Web Services platform, a Microsoft Azure platform, or a Snowflake platform. The resource management component 404 may perform virtualization (e.g., abstraction) of computing hardware 403 to create the one or more virtual computing systems 406. Using virtualization, the resource management component 404 enables a single computing device (e.g., a computer or a server) to operate like multiple computing devices, such as by creating multiple isolated virtual computing systems 406 from computing hardware 403 of the single computing device. In this way, computing hardware 403 can operate more efficiently, with lower power consumption, higher reliability, higher availability, higher utilization, greater flexibility, and lower cost than using separate computing devices.

The computing hardware 403 may include hardware and corresponding resources from one or more computing devices. For example, computing hardware 403 may include hardware from a single computing device (e.g., a single server) or from multiple computing devices (e.g., multiple servers), such as multiple computing devices in one or more data centers. As shown, computing hardware 403 may include one or more processors 407, one or more memories 408, and/or one or more networking components 409. Examples of a processor, a memory, and a networking component (e.g., a communication component) are described elsewhere herein.

The resource management component 404 may include a virtualization application (e.g., executing on hardware, such as computing hardware 403) capable of virtualizing computing hardware 403 to start, stop, and/or manage one or more virtual computing systems 406. For example, the resource management component 404 may include a hypervisor (e.g., a bare-metal or Type 1 hypervisor, a hosted or Type 2 hypervisor, or another type of hypervisor) or a virtual machine monitor, such as when the virtual computing systems 406 are virtual machines 410. Additionally, or alternatively, the resource management component 404 may include a container manager, such as when the virtual computing systems 406 are containers 411. In some implementations, the resource management component 404 executes within and/or in coordination with a host operating system 405.

A virtual computing system 406 may include a virtual environment that enables cloud-based execution of operations and/or processes described herein using computing hardware 403. As shown, a virtual computing system 406 may include a virtual machine 410, a container 411, or a hybrid environment 412 that includes a virtual machine and a container, among other examples. A virtual computing system 406 may execute one or more applications using a file system that includes binary files, software libraries, and/or other resources required to execute applications on a guest operating system (e.g., within the virtual computing system 406) or the host operating system 405.

Although the web host 401 may include one or more elements 403-412 of the cloud computing system 402, may execute within the cloud computing system 402, and/or may be hosted within the cloud computing system 402, in some implementations, the web host 401 may not be cloud-based (e.g., may be implemented outside of a cloud computing system) or may be partially cloud-based. For example, the web host 401 may include one or more devices that are not part of the cloud computing system 402, such as device 500 of Fig. 5, which may include a standalone server or another type of computing device. The web host 401 may perform one or more operations and/or processes described in more detail elsewhere herein.

The network 420 may include one or more wired and/or wireless networks. For example, the network 420 may include a cellular network, a public land mobile network (PLMN), a local area network (LAN), a wide area network (WAN), a private network, the Internet, and/or a combination of these or other types of networks. The network 420 enables communication among the devices of the environment 400.

The instance engine 430 may include one or more devices capable of receiving, generating, storing, processing, and/or providing information associated with events associated with URLs, as described elsewhere herein. For example, the instance engine 430 may host one or more web instances that perform one or more operations and/or processes described in more detail elsewhere herein. The instance engine 430 may include a communication device and/or a computing device. For example, the instance engine 430 may include a server, a database server, an application server, a client server, a web server, a host server, a proxy server, a virtual server (e.g., executing on computing hardware), a server in a cloud computing system, a device that includes computing hardware used in a cloud computing environment, or a similar type of device. The instance engine 430 may communicate with one or more other devices of environment 400, as described elsewhere herein.

The user device 440 may include one or more devices capable of receiving, generating, storing, processing, and/or providing information associated with single-click URLs, as described elsewhere herein. The user device 440 may include a communication device and/or a computing device. For example, the user device 440 may include a wireless communication device, a mobile phone, a user equipment, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. The user device 440 may communicate with one or more other devices of environment 400, as described elsewhere herein.

The administrator device 450 may include one or more devices capable of receiving, generating, storing, processing, and/or providing information associated with configuration files, as described elsewhere herein. The administrator device 450 may include a communication device and/or a computing device. For example, the administrator device 450 may include a wireless communication device, a mobile phone, a user equipment, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. The administrator device 450 may communicate with one or more other devices of environment 400, as described elsewhere herein.

The remote database 460 may be implemented using one or more devices capable of receiving, generating, storing, processing, and/or providing information associated with lock keys, as described elsewhere herein. The remote database 460 may be implemented on a communication device and/or a computing device. For example, the remote database 460 may be implemented on a server, a database server, an application server, a client server, a web server, a host server, a proxy server, a virtual server (e.g., executing on computing hardware), a server in a cloud computing system, a device that includes computing hardware used in a cloud computing environment, or a similar type of device. The remote database 460 may communicate with one or more other devices of environment 400, as described elsewhere herein.

The ML host 470 may include one or more devices capable of receiving, generating, storing, processing, and/or providing information associated with machine learning models, as described elsewhere herein. The ML host 470 may include a communication device and/or a computing device. For example, the ML host 470 may include a server, a database server, an application server, a client server, a web server, a host server, a proxy server, a virtual server (e.g., executing on computing hardware), a server in a cloud computing system, a device that includes computing hardware used in a cloud computing environment, or a similar type of device. The ML host 470 may communicate with one or more other devices of environment 400, as described elsewhere herein.

The number and arrangement of devices and networks shown in Fig. 4 are provided as an example. In practice, there may be additional devices and/or networks, fewer devices and/or networks, different devices and/or networks, or differently arranged devices and/or networks than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) of the environment 400 may perform one or more functions described as being performed by another set of devices of the environment 400.

Fig. 5 is a diagram of example components of a device 500 associated with using configuration files to group actions in a single-click environment. The device 500 may correspond to an instance engine 430, a user device 440, an administrator device 450, a device providing a remote database 460, and/or an ML host 470. In some implementations, an instance engine 430, a user device 440, an administrator device 450, a device providing a remote database 460, and/or an ML host 470 may include one or more devices 500 and/or one or more components of the device 500. As shown in Fig. 5, the device 500 may include a bus 510, a processor 520, a memory 530, an input component 540, an output component 550, and/or a communication component 560.

The bus 510 may include one or more components that enable wired and/or wireless communication among the components of the device 500. The bus 510 may couple together two or more components of Fig. 5, such as via operative coupling, communicative coupling, electronic coupling, and/or electric coupling. For example, the bus 510 may include an electrical connection (e.g., a wire, a trace, and/or a lead) and/or a wireless bus. The processor 520 may include a central processing unit, a graphics processing unit, a microprocessor, a controller, a microcontroller, a digital signal processor, a field-programmable gate array, an application-specific integrated circuit, and/or another type of processing component. The processor 520 may be implemented in hardware, firmware, or a combination of hardware and software. In some implementations, the processor 520 may include one or more processors capable of being programmed to perform one or more operations or processes described elsewhere herein.

The memory 530 may include volatile and/or nonvolatile memory. For example, the memory 530 may include random access memory (RAM), read only memory (ROM), a hard disk drive, and/or another type of memory (e.g., a flash memory, a magnetic memory, and/or an optical memory). The memory 530 may include internal memory (e.g., RAM, ROM, or a hard disk drive) and/or removable memory (e.g., removable via a universal serial bus connection). The memory 530 may be a non-transitory computer-readable medium. The memory 530 may store information, one or more instructions, and/or software (e.g., one or more software applications) related to the operation of the device 500. In some implementations, the memory 530 may include one or more memories that are coupled (e.g., communicatively coupled) to one or more processors (e.g., processor 520), such as via the bus 510. Communicative coupling between a processor 520 and a memory 530 may enable the processor 520 to read and/or process information stored in the memory 530 and/or to store information in the memory 530.

The input component 540 may enable the device 500 to receive input, such as user input and/or sensed input. For example, the input component 540 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 550 may enable the device 500 to provide output, such as via a display, a speaker, and/or a light-emitting diode. The communication component 560 may enable the device 500 to communicate with other devices via a wired connection and/or a wireless connection. For example, the communication component 560 may include a receiver, a transmitter, a transceiver, a modem, a network interface card, and/or an antenna.

The device 500 may perform one or more operations or processes described herein. For example, a non-transitory computer-readable medium (e.g., memory 530) may store a set of instructions (e.g., one or more instructions or code) for execution by the processor 520. The processor 520 may execute the set of instructions to perform one or more operations or processes described herein. In some implementations, execution of the set of instructions, by one or more processors 520, causes the one or more processors 520 and/or the device 500 to perform one or more operations or processes described herein. In some implementations, hardwired circuitry may be used instead of or in combination with the instructions to perform one or more operations or processes described herein. Additionally, or alternatively, the processor 520 may be configured to perform one or more operations or processes described herein. Thus, implementations described herein are not limited to any specific combination of hardware circuitry and software.

The number and arrangement of components shown in Fig. 5 are provided as an example. The device 500 may include additional components, fewer components, different components, or differently arranged components than those shown in Fig. 5. Additionally, or alternatively, a set of components (e.g., one or more components) of the device 500 may perform one or more functions described as being performed by another set of components of the device 500.

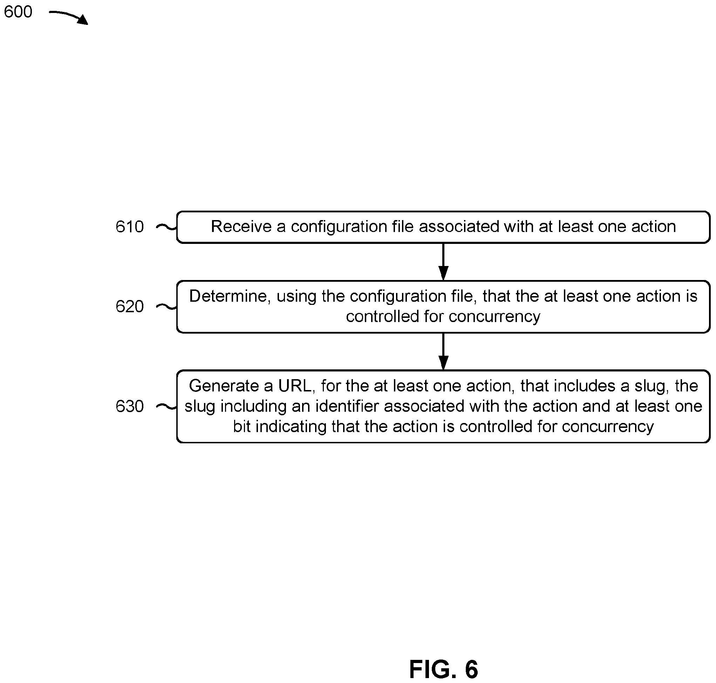

Fig. 6 is a flowchart of an example process 600 associated with using configuration files to group actions in a single-click environment. In some implementations, one or more process blocks of Fig. 6 may be performed by a web host 401. In some implementations, one or more process blocks of Fig. 6 may be performed by another device or a group of devices separate from or including the web host 401, such as an instance engine 430, a user device 440, an administrator device 450, a device providing a remote database 460, and/or an ML host 470. Additionally, or alternatively, one or more process blocks of Fig. 6 may be performed by one or more components of the device 500, such as processor 520, memory 530, input component 540, output component 550, and/or communication component 560.

As shown in Fig. 6, process 600 may include receiving a configuration file associated with at least one action (block 610). For example, the web host 401 (e.g., using processor 520, memory 530, input component 540, and/or communication component 560) may receive a configuration file associated with at least one action, as described above in connection with Fig. 1A. As an example, the web host 401 may receive the configuration file from a local storage (e.g., a cache and/or another type or memory controlled by the web host 401) or from a storage that is at least partially separate from the web host 401 (e.g., physically, virtually, and/or logically). Additionally, or alternatively, an administrator device may transmit, and the web host 401 may receive, the configuration file.

As further shown in Fig. 6, process 600 may include determining, using the configuration file, that the at least one action is controlled for concurrency (block 620). For example, the web host 401 (e.g., using processor 520 and/or memory 530) may determine, using the configuration file, that the at least one action is controlled for concurrency, based on an indicator as described above in connection with Fig. 1B. As an example, the web host 401 may identify an index, in the configuration file, associated with the at least one action and representing a concurrency control group that includes the at least one action. In another example, the web host 401 may identify a Boolean, in the configuration file, associated with the at least one action and indicating that the at least one action is controlled for concurrency.

As further shown in Fig. 6, process 600 may include generating a URL, for the at least one action, that includes a slug, the slug including an identifier associated with the action and at least one bit indicating that the action is controlled for concurrency (block 630). For example, the web host 401 (e.g., using processor 520 and/or memory 530) may generate a URL, for the at least one action, that includes a slug, the slug including an identifier associated with the action and at least one bit indicating that the action is controlled for concurrency, as described above in connection with reference number 130 of Fig. 1D. As an example, the slug may include a first portion associated with a session ID and a second portion associated with an action ID. Accordingly, the at least one bit may be included in the second portion of the slug. Additionally, or alternatively, the at least one bit may include an MSB or an LSB in a bit sequence that encodes the action ID.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel. The process 600 is an example of one process that may be performed by one or more devices described herein. These one or more devices may perform one or more other processes based on operations described herein, such as the operations described in connection with Figs. 1A-1D, 2A-2D, and/or 3. Moreover, while the process 600 has been described in relation to the devices and components of the preceding figures, the process 600 can be performed using alternative, additional, or fewer devices and/or components. Thus, the process 600 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code-it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

Various examples are set out in the following numbered paragraphs (NPs).
NP 1. A system for preventing double actions using configuration files in a single-click environment, the system comprising:
   one or more memories; and
   one or more processors, communicatively coupled to the one or more memories, configured to:
      receive an indication of a click event associated with a single-click uniform resource locator (URL) that is associated with an action;
      receive a configuration file associated with the action;
      determine, using the configuration file, that the action is controlled for concurrency;
      communicate with a remote database to determine whether the action is currently locked; and
      selectively trigger execution of the action based on whether the action is currently locked.
NP 2. The system of NP 1, wherein the one or more processors, to determine that the action is controlled for concurrency, are configured to:
   determine, using the configuration file, a concurrency control group that includes the action.
NP 3. The system of NP 1, wherein the one or more processors are configured to:
   transmit a response to the indication of the click event, to a user device, based on selectively triggering execution of the action.
NP 4. The system of NP 3, wherein the one or more processors, to transmit the response, are configured to:
   transmit a webpage including the response.
NP 5. The system of NP 1, wherein the one or more processors are configured to:
   transmit, in response to the indication of the click event, a request for the configuration file,
   wherein the configuration file is received in response to the request.
NP 6. The system of NP 1, wherein the configuration file comprises a JavaScript object notation (JSON) file.
NP 7. The system of NP 1, wherein the configuration file comprises a Python file.
NP 8. A method of preventing double actions using configuration files in a single-click environment, comprising:
   receiving, at a web host, a configuration file defining a plurality of actions;
   providing, from the web host and to a machine learning model, code associated with the plurality of actions;
   receiving, at the web host and from the machine learning model, an indication of two or more actions, in the plurality of actions, that are contradictory;
   encoding, by the web host, a plurality of concurrency indicators associated with the two or more actions; and
   outputting, by the web host, an updated configuration file based on the configuration file and the plurality of concurrency indicators.
NP 9. The method of NP 8, further comprising:
   training, by the web host, the machine learning model using a labeled set of code.
NP 10. The method of NP 8, wherein providing the code to the machine learning model comprises:
   transmitting a request, to a machine learning host, including the code,
   wherein the indication of the two or more actions is received from the machine learning host.
NP 11. The method of NP 8, wherein each concurrency indicator, in the plurality of
   concurrency indicators, comprises a Boolean.
NP 12. The method of NP 8, wherein at least one concurrency indicator, in the plurality of concurrency indicators, comprises an index representing a concurrency control group that includes the two or more actions.
NP 13. The method of NP 8, wherein outputting the updated configuration file comprises: transmitting the updated configuration file to a memory controlled by the web host.
NP 14. A non-transitory computer-readable medium storing a set of instructions for generating uniform resource locators (URLs) using configuration files in a single-click environment, the set of instructions comprising:
   one or more instructions that, when executed by one or more processors of a device, cause the device to:
   receive a configuration file associated with at least one action;
   determine, using the configuration file, that the at least one action is controlled for concurrency; and
   generate a URL for the at least one action, wherein the URL comprises a slug that includes an identifier associated with the action and at least one bit indicating that the action is controlled for concurrency.
NP 15. The non-transitory computer-readable medium of NP 14, wherein the one or more instructions, when executed by the one or more processors, cause the device to:
   transmit, to an engine associated with web instances, an indication of the URL and an indication of the at least one bit.
NP 16. The non-transitory computer-readable medium of NP 14, wherein the one or more instructions, that cause the device to receive the configuration file, cause the device to:
   transmit a request, for the configuration file, that indicates the at least one action; and
   receive the configuration file in response to the request.
NP 17. The non-transitory computer-readable medium of NP 14, wherein the one or more instructions, that cause the device to determine that the at least one action is controlled for concurrency, cause the device to:
   identify an index, in the configuration file, associated with the at least one action and representing a concurrency control group that includes the at least one action.
NP 18. The non-transitory computer-readable medium of NP 14, wherein the one or more instructions, that cause the device to determine that the at least one action is controlled for concurrency, cause the device to:
   identify a Boolean, in the configuration file, associated with the at least one action and indicating that the at least one action is controlled for concurrency.
NP 19. The non-transitory computer-readable medium of NP 14, wherein the at least one bit comprises at least one character in a character sequence that encodes the identifier associated with the at least one action.
NP 20. The non-transitory computer-readable medium of NP 14, wherein the at least one bit comprises a most significant bit in a bit sequence that encodes the identifier associated with the at least one action.

## Claims

1. A system for preventing double actions using configuration files in a single-click environment, the system comprising:
one or more memories; and
one or more processors, communicatively coupled to the one or more memories, configured to:
receive an indication of a click event associated with a single-click uniform resource locator (URL) that is associated with an action;
receive a configuration file associated with the action;
determine, using the configuration file, that the action is controlled for concurrency;
communicate with a remote database to determine whether the action is currently locked;and
selectively trigger execution of the action based on whether the action is currently locked.

2. The system of claim 1, wherein the one or more processors, to determine that the action is controlled for concurrency, are configured to:
determine, using the configuration file, a concurrency control group that includes the action.

3. The system of claim 1 or 2, wherein the one or more processors are configured to:
transmit a response to the indication of the click event, to a user device, based on selectively triggering execution of the action, optionally, wherein the one or more processors, to transmit the response, are configured to: transmit a webpage including the response.

4. The system of any preceding claim, wherein the one or more processors are configured to:
transmit, in response to the indication of the click event, a request for the configuration file,
wherein the configuration file is received in response to the request.

5. The system of any preceding claim, wherein the configuration file comprises a JavaScript object notation (JSON) file; and/or a Python file.

6. A method of preventing double actions using configuration files in a single-click environment, comprising:
receiving, at a web host, a configuration file defining a plurality of actions;
providing, from the web host and to a machine learning model, code associated with the plurality of actions;
receiving, at the web host and from the machine learning model, an indication of two or more actions, in the plurality of actions, that are contradictory;
encoding, by the web host, a plurality of concurrency indicators associated with the two or more actions; and
outputting, by the web host, an updated configuration file based on the configuration file and the plurality of concurrency indicators.

7. The method of claim 6, further comprising:
training, by the web host, the machine learning model using a labeled set of code.

8. The method of claim 6 or 7, wherein providing the code to the machine learning model comprises:
transmitting a request, to a machine learning host, including the code,
wherein the indication of the two or more actions is received from the machine learning host.

9. The method of any one of claims 6-8, wherein each concurrency indicator, in the plurality of concurrency indicators, comprises a Boolean, and/or, wherein at least one concurrency indicator, in the plurality of concurrency indicators, comprises an index representing a concurrency control group that includes the two or more actions.

10. The method of any one of claims 6-9, wherein outputting the updated configuration file comprises:
transmitting the updated configuration file to a memory controlled by the web host.

11. A non-transitory computer-readable medium storing a set of instructions for generating uniform resource locators (URLs) using configuration files in a single-click environment, the set of instructions comprising:
one or more instructions that, when executed by one or more processors of a device, cause the device to:
receive a configuration file associated with at least one action;
determine, using the configuration file, that the at least one action is controlled for concurrency; and
generate a URL for the at least one action, wherein the URL comprises a slug that includes an identifier associated with the action and at least one bit indicating that the action is controlled for concurrency.

12. The non-transitory computer-readable medium of claim 11, wherein the one or more instructions, when executed by the one or more processors, cause the device to:
transmit, to an engine associated with web instances, an indication of the URL and an indication of the at least one bit.

13. The non-transitory computer-readable medium of claim 11 or 12, wherein the one or more instructions, that cause the device to receive the configuration file, cause the device to:
transmit a request, for the configuration file, that indicates the at least one action; and
receive the configuration file in response to the request.

14. The non-transitory computer-readable medium of any one of claims 11-13, wherein the one or more instructions, that cause the device to determine that the at least one action is controlled for concurrency, cause the device to:
identify an index, in the configuration file, associated with the at least one action and representing a concurrency control group that includes the at least one action, and/or
identify a Boolean, in the configuration file, associated with the at least one action and indicating that the at least one action is controlled for concurrency.

15. The non-transitory computer-readable medium of any one of claims 11-14, wherein the at least one bit comprises at least one character in a character sequence that encodes the identifier associated with the at least one action, and/or a most significant bit in a bit sequence that encodes the identifier associated with the at least one action.
